# EUROPEAN PATENT APPLICATION

(11) **EP 4 560 808 A1**
(43) Date of publication of application: **28.05.2025**
(21) Application number: 23907519.5
(22) Date of filing: 06.12.2023
(51) Int. Cl.: H01M 50/24, H01M 50/204, H01M 50/30, H01M 50/249, H01M 50/264

(54) **BATTERY PACK AND VEHICLE COMPRISING SAME**

(30) Priority: 23.12.2022 KR 20220183750; 27.06.2023 KR 20230083037
(71) Applicant: LG Energy Solution, Ltd., Seoul 07335 (KR)
(72) Inventor: KIM, Ji-Hun, Daejeon 34122 (KR); KIM, Sang-Jin, Daejeon 34122 (KR); BAEK, Seung-Ryul, Daejeon 34122 (KR); SEOL, Jae-Jung, Daejeon 34122 (KR); YOON, Seog-Jin, Daejeon 34122 (KR)
(74) Representative: Plasseraud IP
(86) International application number: PCT/KR2023/020027
(87) International publication number: WO 2024/136233

(57) **Abstract**

The present disclosure discloses a battery pack with improved internal-pressure resistance. A battery pack according to an aspect of the present disclosure may include at least one battery module and a pack case configured to accommodate the battery module in an inner space thereof, wherein the pack case may include a case body configured to have the inner space provided therein and an opening provided on at least one of one side and the other side opposite the one side, and an encloser configured to seal the opening by being coupled with the case body to prevent the opening from being exposed to the outside of the pack case.

## Description

### TECHNICAL FIELD

The present disclosure relates to a battery pack and a vehicle including the same, and more specifically, it relates to a battery pack with improved resistance to internal pressure of the battery pack, and a vehicle including the same.

The present application claims priority to Korean Patent Application No. 10-2022-0183750 filed on December 23, 2022 and Korean Patent Application No. 10-2023-0083037 filed on June 27, 2023 in the Republic of Korea, the disclosures of which are incorporated herein by reference.

### BACKGROUND ART

Recently, secondary batteries have been widely used in medium and large devices such as electric vehicles and energy storage systems (ESSs), as well as in small devices such as portable electronic devices, for driving or energy storage. These secondary batteries may be electrically connected and stored inside a module case to form a battery module, and these battery modules may be electrically reconnected in a narrow space to increase energy density, thereby forming a battery pack.

However, in the case where a large number of battery modules are stored densely in a small space, they may be vulnerable to accidents such as fire or explosion. For example, if an event such as thermal runaway occurs in any one of the battery modules, high-temperature venting gas may be emitted from the battery module. If this high-temperature venting gas fails to be appropriately discharged or if the internal pressure significantly increases, the battery pack may explode or the gas or flame may be discharged in unintended directions, thereby causing casualties.

To solve this problem, although a venting device is used to discharge gas or flame in the intended direction to minimize damage, if leaks occur due to deformation of a battery housing before reaching the internal pressure allowed by the venting device, venting is performed at random positions, which poses a safety risk.

### DISCLOSURE

### Technical Problem

The present disclosure has been designed to solve the problems of the related art, and therefore the present disclosure is directed to providing a battery pack configured to have high resistance to internal pressure of the battery pack, and a vehicle including the same.

The present disclosure is also to provide a battery pack configured to ensure airtightness, watertightness, and ease of assembly by restricting assembly positions, and a vehicle including the same.

The present disclosure is also to provide a battery pack configured to adjust the structure to conform to the time at which venting must occur due to internal pressure, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery pack including: at least one battery module; and a pack case configured to accommodate the battery module in an inner space thereof, wherein the pack case may include: a case body configured to have the inner space provided therein and an opening provided on at least one of one side and the other side opposite the one side; and an encloser configured to seal the opening by being coupled with the case body to prevent the opening from being exposed to the outside of the pack case.

The encloser may include a protrusion protruding from the outer surface thereof coupled to the case body toward the inner surface of the case body, and the case body may include a recess formed on the inner surface thereof so as to correspond to the protrusion.

The encloser may include a cover portion configured to cover the opening, and the protrusion may be formed on at least one of both ends of the cover portion to protrude toward the inner surface of the case body.

The protrusion may be formed at each of the both ends of the cover portion and may extend to protrude a predetermined length from both one end and the other end of the cover portion toward the inner surface of the case body.

The protrusion may be formed at at least one end of the cover portion to be tapered toward the inner surface of the case body.

The protrusion may have a V-shaped cross-section.

The encloser may have a plate shape and may be coupled to the case body on one side and the other side, and the protrusion may be provided on each of one edge and the other edge of the encloser.

Two pairs of protrusions may be provided such that one pair of protrusions is provided on each of one edge and the other edge of the encloser, and the pair of protrusions provided on each of the one edge and the other edge is disposed to be spaced a predetermined distance apart from each other in the width direction of the encloser

The battery pack may include a sealing member interposed between the encloser and the case body.

The sealing member may be disposed between a pair of protrusions provided on each of the one edge and the other edge.

The battery pack may include a venting device provided in the encloser and configured to discharge gas generated from the battery module to the outside of the pack case.

**In** addition, a vehicle according to the present disclosure may include the battery pack according to the embodiments described above.

### Advantageous Effects

According to one aspect of the present disclosure, the airtightness of the pack case may be secured by sealing the opening, thereby effectively preventing unintended leakage of gas or flame out of the pack case during a thermal event of the battery module.

According to another aspect of the present disclosure, the battery pack may have high resistance to internal pressure thereof. Even if the internal pressure of the battery pack increases, it may provide high resistance to shear stress caused by the internal pressure. Accordingly, the airtightness and watertightness of the battery pack may also be enhanced.

According to another aspect of the present disclosure, it is possible to adjust the heights and/or thicknesses of the protrusion and recess depending on the degree of resistible internal pressure, thereby designing the structure of the battery pack to conform to the time at which venting must occur depending on the internal pressure.

According to another aspect of the present disclosure, it is possible to further increase the coupling area between the case body and the encloser, thereby improving the coupling force. **In** addition, in the case where venting occurs due to an increase in the internal pressure of the battery pack, even if the coupling between the case body and the encloser in the portion adjacent to the inside of the battery pack is temporarily loosened, since the gas movement path between the case body and the encloser increases, the gas may vent through another path such as a path through a venting hole, which will be described later, thereby enabling the case body and the encloser to be recoupled. That is, the resistance to internal pressure of the battery pack may be further improved.

According to another aspect of the present disclosure, the case body and the encloser can be easily coupled.

According to another aspect of the present disclosure, the coupling force between the case body and the encloser may be increased due to a sealing member. **In** particular, a gap between the case body and the encloser, which is caused by production errors, may deteriorate the watertightness and airtightness of the battery pack, but the sealing member is able to prevent such a problem.

### DESCRIPTION OF DRAWINGS

FIG. 1 is a diagram illustrating the appearance of a battery pack according to an embodiment of the present disclosure.
FIG. 2 is an exploded diagram illustrating the elements of a battery pack according to an embodiment of the present disclosure.
FIG. 3 is a diagram illustrating the coupling relationship between a case body and an encloser included in a battery pack according to an embodiment of the present disclosure.
FIG. 4 is an enlarged view of a portion in FIG. 3.
FIG. 5 is a diagram illustrating an encloser included in a battery pack according to an embodiment of the present disclosure.
FIG. 6 is a diagram illustrating some elements included in a battery pack according to an embodiment of the present disclosure.
FIG. 7 is a diagram illustrating some elements included in a battery pack according to an embodiment of the present disclosure.
FIG. 8 is a diagram illustrating some elements of a battery pack according to another embodiment of the present disclosure.
FIG. 9 is a cross-sectional view of some elements included in the battery pack in FIG. 8.
FIG. 10 is a diagram illustrating the coupling relationship between a case body and an encloser included in a battery pack according to another embodiment of the present disclosure.
FIG. 11 is a diagram illustrating a vehicle according to an embodiment of the present disclosure.

### BEST MODE

Hereinafter, preferred embodiments of the present disclosure will be described in detail with reference to the accompanying drawings. The accompanying drawings illustrate a preferred embodiment of the present disclosure and, together with the detailed description of the invention, serve to provide further understanding of the technical idea of the present disclosure, and thus, the present disclosure is not construed as being limited to the drawings. The same reference numerals indicate the same elements. In addition, the thicknesses, ratios, and sizes of the elements in the attached drawings are exaggerated to effectively explain the technical features of the present disclosure.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Although terms indicating directions such as upward and downward are used in this specification, it is obvious to those skilled in the art to which the present disclosure pertains that these terms are only for convenience of explanation and may vary depending on the location of the target object or the location of the observer.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

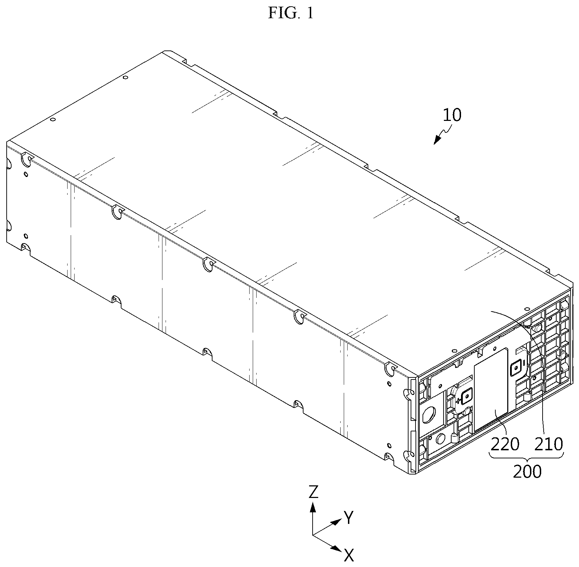

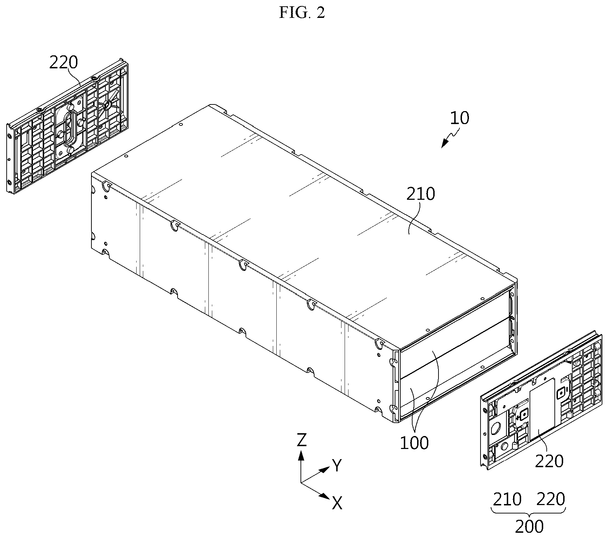

FIG. 1 is a diagram illustrating the appearance of a battery pack 10 according to an embodiment of the present disclosure, and FIG. 2 is an exploded diagram illustrating the elements of a battery pack 10 according to an embodiment of the present disclosure.

Referring to FIGS. 1 and 2, the battery pack 10 according to the present disclosure may include a battery module 100 and a pack case 200.

Although the battery module 100 is not shown in detail, the battery module 100 may include a battery cell. A plurality of battery cells may be provided. The battery cell may indicate a secondary battery. The battery cell may include an electrode assembly, an electrolyte, the battery case accommodating the electrode assembly and the electrolyte, and a pair of electrode leads connected to the electrode assembly and extending to the outside of the battery case. The battery cell may be, for example, a pouch-type secondary battery. However, other types of secondary batteries, such as cylindrical batteries or prismatic batteries, may also be employed as the battery cells in the present disclosure.

The pack case 200 may provide an internal space. The pack case 200 may accommodate the battery module 100 in the internal space. The pack case 200 may have a substantially cuboid shape.

The pack case 200 may include a case body 210 and an encloser 220.

The case body 210 may provide an internal space. The case body 210 may have an opening on at least one of one side and the other side opposite the one side. For example, referring to FIG. 2, the case body 210 may be substantially in the shape of a hollow rectangular pillar and may include four plates. In this case, at least some of the plates constituting the case body 210 may be configured to be integrated with each other. Alternatively, the respective four plates may be manufactured separately, and then coupled to each other by welding, bolting, or the like. In this case, the opening may be provided both in the positive X-axis direction and in the negative X-axis direction.

The encloser 220 may be configured to prevent the opening from being exposed to the outside of the pack case 200. The encloser 220 may be coupled to the case body 210. The encloser 220 may be configured to seal the opening. For example, referring to FIG. 2, the enclosers 220 may be positioned at the openings respectively provided in the positive X-axis direction and the negative X-axis direction of the of the case body 210 so as to be coupled to the case body 210.

The airtightness of the pack case 200 may be secured by sealing the opening using the encloser 220 of the present disclosure, thereby effectively preventing unintended leakage of gas or flame out of the pack case 200 during a thermal event of the battery module 100.

Hereinafter, the encloser 220 of the present disclosure will be described in more detail.

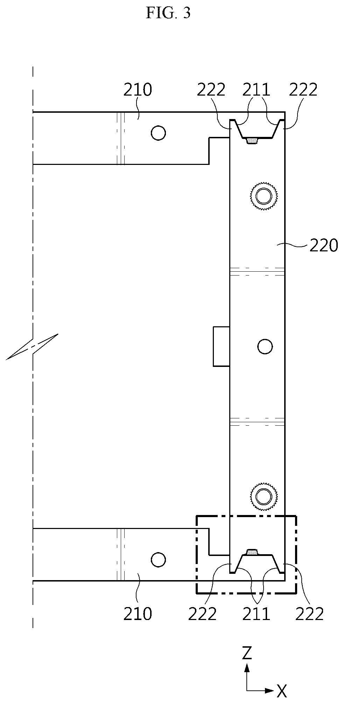

FIG. 3 is a diagram illustrating the coupling relationship between a case body and an encloser included in a battery pack according to an embodiment of the present disclosure.

Referring to FIG. 3, the encloser 220 may have protrusions 222. The case body 210 may have recesses 211.

The encloser 220 may have the protrusions 222 protruding from the outer surface coupled to the case body 210 toward the inner surface of the case body 210. For example, the protrusion 222 may be formed to protrude in the negative Z-axis direction toward the inner surface of the case body 210 from the outer surface of the encloser 220 facing in the negative Z-axis direction.

The case body 210 may have the recesses 211 formed on the inner surface to correspond to the protrusions 222. The recess 211 may receive the protrusion 222. For example, the recess 211 may be formed to be recessed in the negative Z-axis direction from the inner surface of the case body 210 facing in the positive Z-axis direction so as to receive the protrusion 222.

As the protrusions 222 of the encloser 220 are inserted into the recesses 211 of the case body 210, the case body 210 and the encloser 220 may be coupled to each other.

According to this configuration of the present disclosure, the resistance to internal pressure of the battery pack 10 may be significantly improved. During the aforementioned thermal event in the battery module 100, the pressure in the inner space of the pack case 200 of the battery pack 10 may increase due to gas or flame. The present disclosure, even if the internal pressure of the battery pack 10 increases, may provide high resistance to shear stress caused by the internal pressure through the coupling structure capable of securing the airtightness between the encloser 220 and the case body 210. **In** addition, this configuration of the present disclosure may also improve the watertightness of the battery pack 10, as well as the airtightness. **In** addition, the elements of the protrusions 222 and the recesses 211 may increase the coupling area between the case body 210 and the encloser 220, thereby improving the coupling force therebetween.

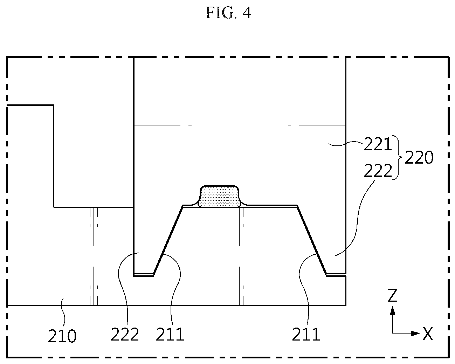

FIG. 4 is an enlarged view of a portion in FIG. 3.

Referring to FIG. 4, the encloser 220 may include a cover portion 221 and a protrusion 222.

The cover portion 221 may be configured to cover the opening. The cover portion 221 may have a substantially cuboid shape to correspond to the opening.

The protrusion 222 may be formed on at least one (directed in the negative Z-axis direction) of the both ends of the cover portion 221. The protrusion 222 may protrude toward the inner surface of the case body 210. Specifically, the protrusion 222 may extend to protrude a predetermined length toward the inner surface of the case body 210. The encloser 220 and the case body 210 may be coupled to each other at least one end (directed in the negative Z-axis direction) at which the protrusion 222 is formed.

Here, the protruding length and/or thickness of the protrusion 222 may be determined depending on a predetermined degree of resistible internal pressure. Likewise, the recessed length or recessed thickness of the recess 211 coupled to the protrusions 222 may also be determined depending on the predetermined degree of resistible internal pressure.

According to this configuration of the present disclosure, since the heights and/or thicknesses of the protrusion 222 and recess 211 are adjusted depending on the degree of resistible internal pressure, it is possible to design the structure of the battery pack 10 to conform to the time at which venting must occur depending on the internal pressure.

The protrusion 222 may be formed to be tapered from at least one end (directed in the negative Z-axis direction) of the cover portion 221 toward the inner surface of the case body 210. For example, the protrusion 222 may be configured to have a substantially V-shaped cross-section.

According to this configuration of the present disclosure, the area in which each protrusions 222 is coupled to the case body 210 may be increased, thereby improving the coupling force between the case body 210 and the encloser 220.

Referring to FIG. 3, the protrusions 222 may be respectively formed at both ends (the end directed in the positive Z-axis direction and the end directed in the negative Z-axis direction) of the cover portion 221. The encloser 220 may be coupled to the case body 210 at both ends thereof at which the protrusions 222 are formed. If the protrusions 222 are formed at both ends, the internal-pressure resistance may be more strengthened, compared to the case in which the protrusion 222 is formed only at one end.

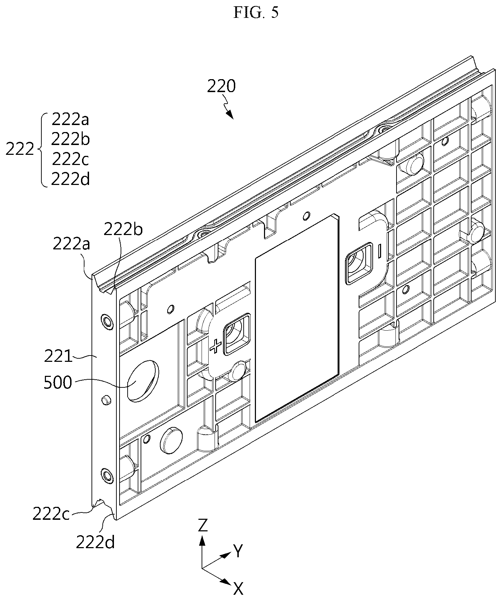

FIG. 5 is a diagram illustrating an encloser included in a battery pack according to an embodiment of the present disclosure.

Referring to FIG. 5, the protrusions 222 may be provided on one edge (directed in the negative Z-axis direction) and the other edge (directed in the positive Z-axis direction) of the encloser 220, respectively. Additionally, two pairs of protrusions 222 (222a to 222d) may be provided such that one pair of protrusions is provided on each of one edge and the other edge of the encloser 220. The pair of protrusions 222 provided on each of one edge and the other edge may be disposed to be spaced a predetermined distance apart from each other in the width direction (X-axis direction) of the encloser 220. For example, a pair of protrusions 222 (222c and 222d) provided on one edge (the edge of the outer surface facing in the negative Z-axis direction) may be disposed to be spaced a predetermined distance apart from each other in the X-axis direction, and a pair of protrusions 222 (222a and 222b) provided on the other edge (the edge of the outer surface facing in the positive Z-axis direction) may also be disposed to be spaced a predetermined distance apart from each other in the X-axis direction

This configuration of the present disclosure may facilitate the coupling of the case body 210 and the encloser 220. If the protrusions 222 are positioned on inner side rather than the edge, the protrusions 222 must be fitted to the case body 210, but if the protrusions 222 are positioned on the edge, only the protrusion 222a or 222c provided on the inner edge positioned inside the battery pack 10 must be fitted, whereas the protrusions 222b or 222d positioned on the outer edge may be caught by the recesses 211, so that the case body 210 and the encloser 220 may be coupled.

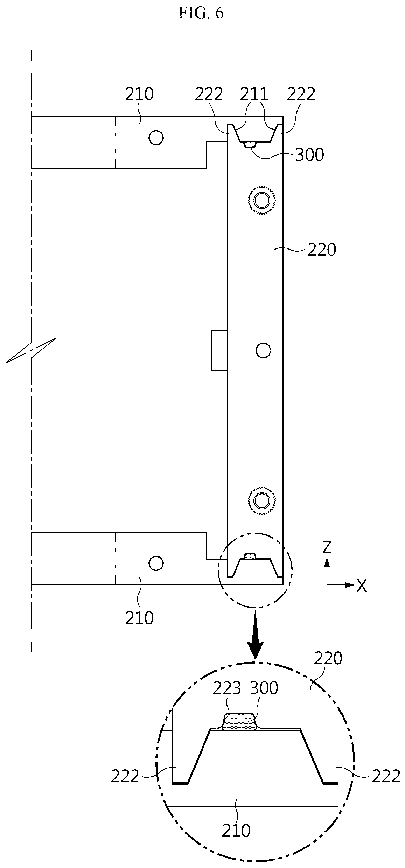

FIG. 6 is a diagram illustrating some elements included in a battery pack according to an embodiment of the present disclosure.

Referring to FIG. 6 and the preceding FIG. 2, the battery pack 10 may include a sealing member 300.

The sealing member 300 may be interposed between the encloser 220 and the case body 210. The sealing member 300 may be provided in the width direction (Y-axis direction) of the case body 210. The sealing member 300 may be disposed between the pair of protrusions 222 provided on each of one edge (directed in the negative Z-axis direction) and the other edge (directed in the positive Z-axis direction).

The encloser 220 may have a sealing groove 223 in which the sealing member 300 is received. The sealing groove 223 may have a shape recessed from the inner surface of the encloser 220 so as to correspond to the shape of the sealing member 300.

According to this configuration of the present disclosure, the coupling force between the case body 210 and the encloser 220 may be increased by the sealing member 300. In particular, a gap between the case body 210 and the encloser 220, which is caused by production errors, may deteriorate the watertightness and airtightness of the battery pack 10, but the sealing member 300 may prevent such a problem.

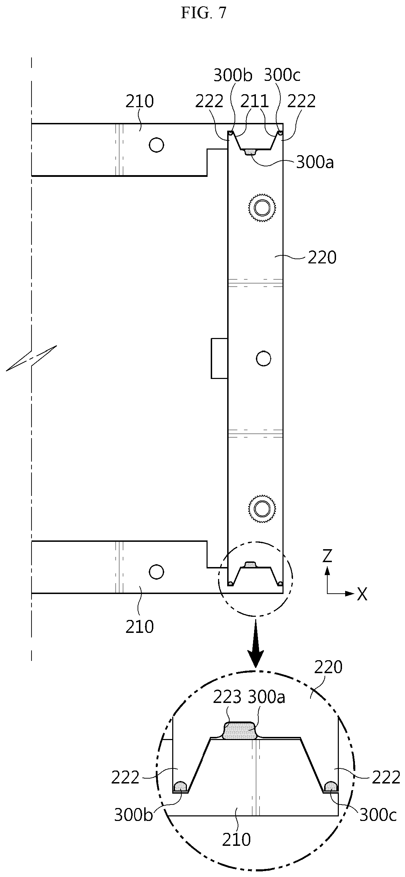

FIG. 7 is a diagram illustrating some elements included in a battery pack 10 according to another embodiment of the present disclosure.

Referring to FIG. 7, sealing members 300 may also be provided between the end of each protrusion 222 and the case body 210. For example, the sealing members 300 may include a sealing member 300a provided between a pair of protrusions 222 provided on each of one edge and the other edge as described above, a sealing member 300b provided at the ends of the protrusions 222 close to the inside of the battery pack 10, and a sealing member 300c provided at the ends of the protrusions 222 close to the outside of the battery pack 10.

The present disclosure may further ensure the watertightness and airtightness while increasing the coupling force between the case body 210 and the encloser 220 through a plurality of sealing members 300a to 300c.

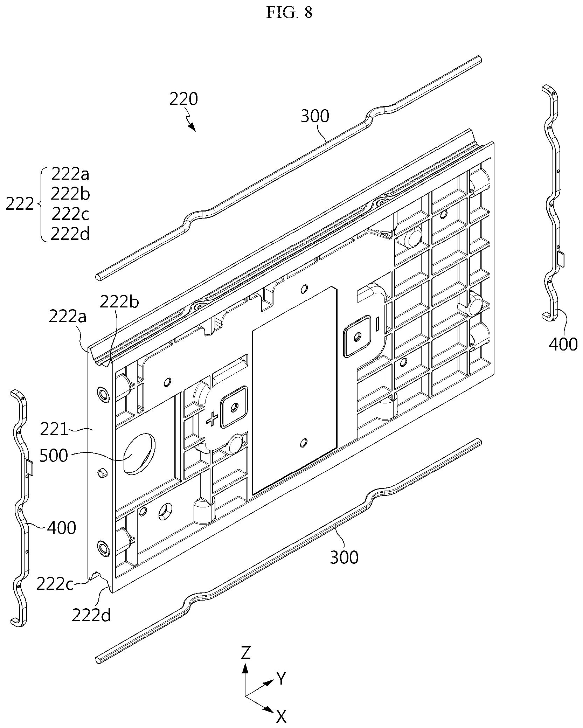

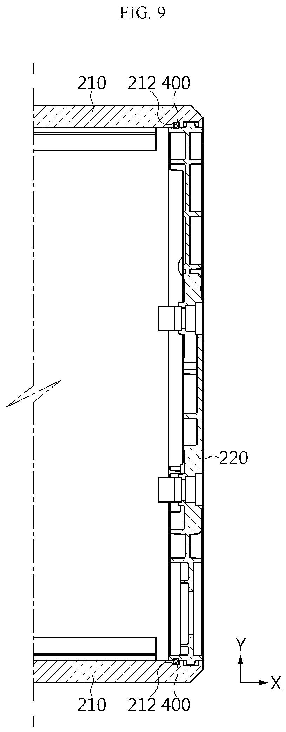

FIG. 8 is a diagram illustrating some elements of a battery pack according to another embodiment of the present disclosure, and FIG. 9 is a cross-sectional view of some elements included in the battery pack in FIG. 8.

Referring to FIGS. 8 and 9, the battery pack 10 may include a supplementary sealing member 400.

The supplementary sealing member 400 may be provided between the encloser 220 and the case body 210, in particular, along the height direction (Z-axis direction) of the case body 210. The case body 210 may have a sealing groove 212 in which the supplementary sealing member 400 is received. The sealing groove 212 may have a shape recessed from the inner surface of the case body 210 so as to correspond to the shape of the case supplementary sealing member 400.

The sealing member 300 and the supplementary sealing member 400 may be configured to be connected so as to substantially surround the entire encloser 220.

According to this configuration of the present disclosure, the watertightness and airtightness of the battery pack 10 may be improved at all four edges between the case body 210 and the encloser 220 by the plurality of sealing members 300 and 400.

Referring back to FIGS. 1 to 5 above, the battery pack 10 may include a venting device 500. The venting device 500 may be provided in the encloser 220. The venting device 500 may be configured to discharge the gas generated from the battery module 100 to the outside of the pack case 200. The venting device 500 may be configured such that it remains closed in the normal state and is opened according to a change in pressure or temperature.

The venting device 500 may be opened at a predetermined allowable internal pressure of the pack case 200 or more to discharged flame or gas inside the pack case 200 to the outside. The mutual coupling structure of the protrusion 222 of the encloser 220 and the recess 211 of the case body 210 may prevent unintended flame or gas leaks that may occur before the allowable internal pressure is reached. As described above, since the protrusions 222 of the encloser 220 are double-fitted to the edge of the case body 210, even if the encloser 220 is deformed due to expansion before the allowable internal pressure is reached, the gas or flame inside the pack case 200 may be effectively blocked at the edges of the case body 210. Accordingly, even if the encloser 220 is deformed before the allowable internal pressure is reached, leaks of flame or gas, in particular, the leaks from the edges of the case body 210, may be effectively prevented by the double-coupling structure of the protrusion 222.

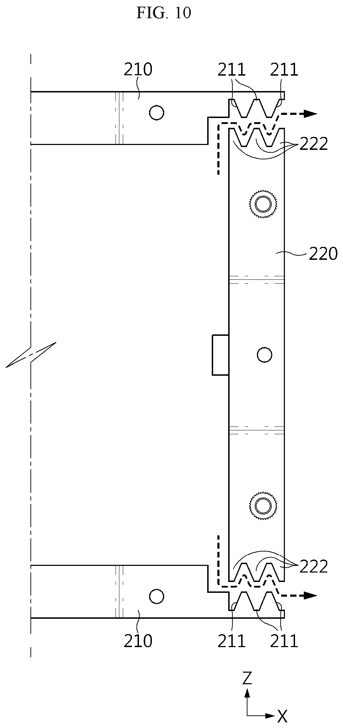

FIG. 10 is a diagram illustrating the coupling relationship between a case body and an encloser included in a battery pack according to the present disclosure.

Referring to FIG. 10, a plurality of protrusions 222 may be provided. For example, three protrusions 222 may be provided at each of the both ends of the encloser 220.

According to this configuration of the present disclosure, the coupling area between the case body 210 and the encloser 220 may be further increased, thereby improving the coupling force. In addition, in the case where venting occurs due to an increase in the internal pressure of the battery pack 10, even if the coupling between the case body 210 and the encloser 220 in a portion adjacent to the inside of the battery pack 10 is temporarily loosened, since the gas movement path between the case body 210 and the encloser 220 increases, the gas may vent through another path such as a path passing through the venting device, thereby enabling the case body 210 and the encloser 220 to be recoupled. That is, the resistance to internal pressure of the battery pack 10 may be further improved.

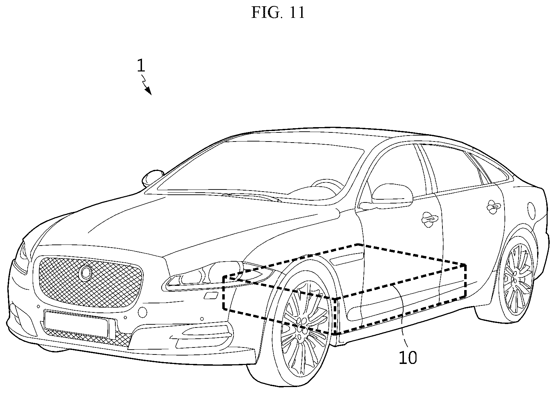

FIG. 11 is a diagram illustrating a vehicle according to the present disclosure.

Referring to FIG. 11, a vehicle 1 according to the present disclosure may include a battery pack 10. The vehicle 1 may be a hybrid vehicle 1 or an electric vehicle 1. The vehicle 1 according to the present disclosure may further include various other elements included in the vehicle 1, in addition to the battery pack 10. For example, the vehicle 1 according to the present disclosure may further include a car body, a motor, a control device such as an electronic control unit (ECU), or the like, in addition to the battery pack 10 according to the present disclosure.

As described above, although the present disclosure has been described based on preferred embodiments with reference to the accompanying drawings, it is obvious to those skilled in the art to which the present disclosure pertains that various and apparent modifications are possible without departing from the scope of the present disclosure. Therefore, the scope of the present disclosure should be construed according to the claims described to encompass the various modifications.

## Claims

1. A battery pack comprising:
at least one battery module; and
a pack case configured to accommodate the battery module in an inner space thereof,
wherein the pack case comprises:
a case body configured to have the inner space provided therein and an opening provided on at least one of one side and the other side opposite the one side; and
an encloser configured to seal the opening by being coupled with the case body to prevent the opening from being exposed to the outside of the pack case.

2. The battery pack according to claim 1,
wherein the encloser comprises
a protrusion protruding from the outer surface thereof coupled to the case body toward the inner surface of the case body, and
wherein the case body comprises
a recess formed on the inner surface thereof so as to correspond to the protrusion.

3. The battery pack according to claim 2,
wherein the encloser comprises
a cover portion configured to cover the opening, and
wherein the protrusion is formed on at least one of both ends of the cover portion to protrude toward the inner surface of the case body.

4. The battery pack according to claim 3,
wherein the protrusion is formed at each of the both ends of the cover portion and configured to protrude a predetermined length from both one end and the other end of the cover portion toward the inner surface of the case body.

5. The battery pack according to claim 3,
wherein the protrusion is formed at least one end of the cover portion to be tapered toward the inner surface of the case body.

6. The battery pack according to claim 4,
wherein the protrusion has a V-shaped cross-section.

7. The battery pack according to claim 2,
wherein the enclose has a plate shape and is coupled to the case body on one side and the other side, and
wherein the protrusion is provided on each of one edge and the other edge of the encloser.

8. The battery pack according to claim 7,
wherein two pairs of protrusions are provided such that one pair of protrusions is provided on each of one edge and the other edge of the encloser, and
wherein the pair of protrusions provided on each of the one edge and the other edge is disposed to be spaced a predetermined distance apart from each other in a width direction of the enclose.

9. The battery pack according to claim 8,
comprising a sealing member interposed between the encloser and the case body.

10. The battery pack according to claim 9,
wherein the sealing member is disposed between a pair of protrusions provided on each of the one edge and the other edge.

11. The battery pack according to claim 1,
comprising a venting device provided in the encloser and configured to discharge gas generated from the battery module to the outside of the pack case.

12. A vehicle including the battery pack according to any one of claims 1 to 11.
